# EUROPÄISCHE PATENTSCHRIFT

(11) **EP 0 349 782 B1**
(45) Veröffentlichungstag und Bekanntmachung des Hinweises auf die Patenterteilung: **01.12.1993**
(21) Anmeldenummer: 89110353.3
(22) Anmeldetag: 08.06.1989
(51) Int. Cl.: H02B 1/20

(54) **Adapter für Stromsammelschienen eines Sammelschienensystems**
Adapter for a bus bar system bus bar
Adaptateur pour une barre conductrice d'un système de barres omnibus

(30) Priorität: 05.07.1988 DE 3822625
(43) Veröffentlichungstag der Anmeldung: 10.01.1990
(73) Patentinhaber: Rittal-Werk Rudolf Loh GmbH & Co. KG, 35745 Herborn (DE)
(72) Erfinder: Münch, Udo, D-6349 Sinn (DE)
(74) Vertreter: Jeck, Anton, Dipl.-Ing.

(56) Entgegenhaltungen:
- EP-A- 0 270 994
- DE-A- 3 409 211
- DE-U- 8 317 456
- FR-A- 2 495 392

## Beschreibung

Die Erfindung betrifft einen Adapter zum mechanischen und elektrischen Verbinden von Installationsgeräten, Einspeise- und/oder Abgangsleitungen mit Stromsammelschienen eines Sammelschienensystems, bei dem jeder Stromsammelschiene eine an der Stromsammelschiene anliegende Kontaktschiene und ein mittels einer Klemmschraube in Richtung von der Stromsammelschiene weg verstellbarer Klemmkörper zugeordnet ist, bei dem die Klemmkörper mit Quersteg und Seitenschenkeln U-förmig ausgebildet sind und an den Enden der senkrecht zur Stromsammelschiene gerichteten Seitenschenkel rechtwinklig abstehenden Klemmbacken tragen, bei dem die Klemmkörper mit ihren Seitenschenkeln die Kontaktschienen umgreifen und in ihren den Stromsammelschienen abgekehrten Querstegen die Klemmschrauben senkrecht zur Kontaktschiene verstellbar aufnehmen, bei dem die Klemmschrauben sich auf den Kontaktschienen abstützen, und bei dem die Klemmbacken der Seitenschenkel der Klemmkörper die im Querschnitt rechteckigen Stromsammelschienen den Kontaktschienen abgekehrt hintergreifen, so daß die Klemmkörper die Kontaktschienen mit den zugeordneten Stromsammelschienen mechanisch verspannen und elektrisch leitend verbinden.

Adapter dieser Art sind durch die EP-A 0 270 994 bekannt und dienen den unterschiedlichsten Zwecken, wie z.B. der Absicherung von Stromkreisen, dem Anschluß von Einspeise- und Abgangsleitungen oder der Verbindung von Installationsgeräten im Bereich der Stromsammelschienen eines Sammelschienensystems. Dabei werden die in einem Klemmabschnitt mittels der Klemmschrauben gegen die Stromsammelschienen verspannt und elektrisch leitend mit diesen verbunden. Damit die Bauhöhe der Adapter klein bleibt, sind die Kontaktschienen nicht besonders dick. Dies hat zur Folge, daß die Kontaktschienen im Klemmabschnitt beim Festziehen der Klemmschrauben verformt werden können. Dadurch wird die Führung der Klemmkörper beim Verstellen an den Kontaktschienen, die sowieso leicht zum Verkanten und Verklemmen neigt, noch verschlechtert.

Es ist Aufgabe der Erfindung, bei einem Adapter der eingangs erwähnten Art die Kontaktschienen so zu verbessern, daß trotz kleiner Dicke derselben ein Verformen durch die Klemmschrauben vermieden ist und daß beim Verstellen der Klemmkörper eine eindeutige Führung an den Kontaktschienen und Stromsammelschienen ohne Verkanten und Verklemmen sichergestellt ist.

Diese Aufgabe wird nach der Erfindung dadurch gelöst, daß die Kontaktschienen in dem zwischen den Seitenschenkeln der Klemmkörper liegenden Klemmabschnitt an den den einander zugekehrten Innenseiten der Seitenschenkel zugekehrten Kanten rechtwinklig abgewinkelte Führungslappen tragen, daß die Führungslappen der Kontaktschienen eine Breite aufweisen, die in etwa der Breite der Seitenschenkel der Klemmkörper entspricht, und daß die Kontaktschienen im Klemmabschnitt mit den Führungslappen eine Außenabmessung aufweisen, die etwa dem lichten Abstand der Seitenschenkel der Klemmkörper entspricht.

Die Führungslappen geben der Kontaktschiene in dem Klemmabschnitt eine wesentlich erhöhte Festigkeit, so daß selbst bei überhöhter Spannkraft der Klemmschraube keine Verformung der Kontaktschiene in diesem Bereich erfolgt. Außerdem geben die Führungslappen der Kontaktschiene dem Klemmkörper bei seiner Verstellung große Führungsflächen, die ein Verkanten oder Verklemmen des Klemmkörpers an der Kontaktschiene verhindern. Die erhöhte Festigkeit der Kontaktschienen und die verbesserte Führung der Klemmkörper wird allein durch die am Klemmabschnitt der Kontaktschienen abgewinkelten Führungslappen erreicht. Die Abmessungen der Führungslappen der Kontaktschienen und ihre Anpassung an den Klemmkörper bringen die eindeutige Führung bei Verstellen der Klemmkörper an den Kontaktschienen und Stromsammelschienen.

Damit die Führungslappen keinen Einfluß auf den Verstellweg der Klemmkörper an den Kontaktschienen haben, sieht eine Ausgestaltung vor, daß die Führungslappen der Kontaktschienen in Richtung zu den Stromsammelschienen hin abgewinkelt sind.

Zur eindeutigen Führung ohne Verklemmen ist nach einer weiteren Ausgestaltung vorgesehen, daß die Führungslappen der Kontaktschienen zumindest an der den Stromsammelschienen zugekehrten Seite der Seitenschenkel der Klemmkörper nicht vorstehen.

Nach einer weiteren Ausgestaltung ist vorgesehen, daß die Ecken der Führungslappen der Kontaktschienen abgerundet sind.

Die Erfindung wird anhand eines in der Zeichnung dargestellten Ausführungsbeispiels näher erläutert. Es zeigt:
Fig. 1 einen Teilschnitt durch einen Adapter, der einen Klemmkörper und eine Kontaktschiene mit Anschlußabschnitt erkennen läßt, und
Fig. 2 den Klemmkörper und die Kontaktschiene in Explosionsdarstellung sowie die Kontaktschiene, auf die der Stromsammelschiene zugekehrten Seite gesehen.

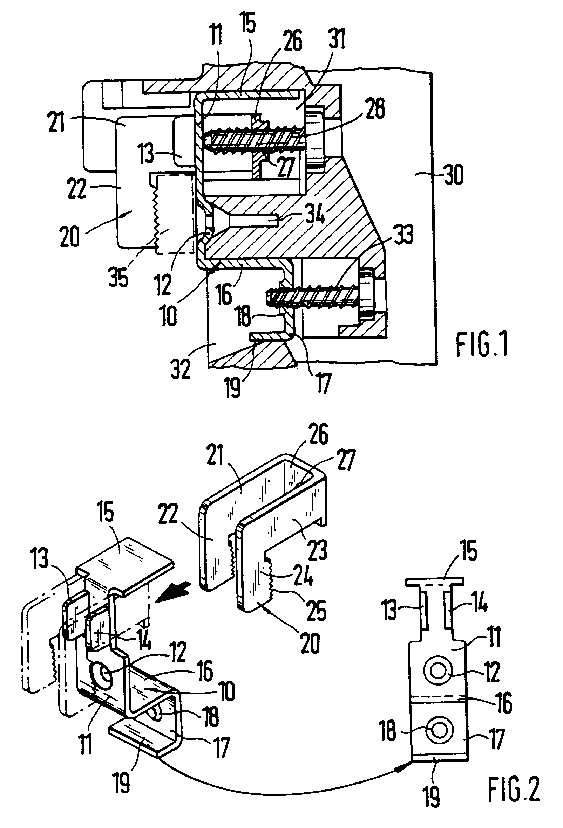

Bei dem Adapter nach den Fig. 1 und 2 sind in die Unterseite des Adaptergehäuses 30 pro Stromsammelschiene 35 zwei Ausnehmungen 31 und 32 eingebracht. In die Ausnehmung 31 ragt die Abkantung 15 der Kontaktschiene 10, die mit dem Klemmabschnitt 11 die Ausnehmung 31 überdeckt. Der Klemmabschnitt 11 weist die eingelassene Befestigungsbohrung 12 auf, in die eine Befestigungsschraube eingeführt wird, die in die Schraubenaufnahme 34 des Adaptergehäuses 30 eingebracht ist. An dem Klemmabschnitt 11 der Kontaktschiene 10 schließt sich die Abkantung 16 mit dem Anschlußsteg 17 und dem Endabschnitt 19 an, die alle in die Ausnehmung 32 eingeführt und dort festgehalten sind. In die Gewindebohrung 18 im Anschlußsteg 17 wird die Anschlußschraube 33 eingeschraubt, mit der eine Einspeise- oder Abgangsleitung mit der Kontaktschiene 10 elektrisch leitend verbunden wird.

Die Ausnehmung 31 nimmt den U-förmigen Klemmkörper 20 auf, der mit seinen beiden Seitenschenkeln 21 und 23 den Klemmkörper 20 im Bereich des Klemmabschnittes 11 umgreift. Der Klemmabschnitt 11 trägt in diesem Bereich an den Seitenkanten abgewinkelte Führungslappen 13 und 14, deren Außenabmessungen in etwa dem lichten Abstand der Seitenschenkel 21 und 23 des Klemmkörpers 20 entsprechen. Diese Führungslappen 13 und 14 sind in Richtung zur Stromsammelschiene 35 hin abgekantet, damit sie den Verstellweg zwischen dem Klemmabschnitt 11 der Kontaktschiene 10 und dem Quersteg 26 des Klemmkörpers 20 nicht verkleinern. Der Quersteg 26 ist mit der Gewindebohrung 27 versehen, die die Klemmschraube 28 aufnimmt. Die Klemmschraube 28 stützt sich am Klemmabschnitt 11 der Kontaktschiene 10 ab, der durch die Führungslappen 13 und 14 zusätzlich versteift ist. Außerdem führen die Führungslappen 13 und 14 den Klemmkörper 20, wenn dieser mittels der Klemmschraube 28 verstellt wird, so daß ein Verkanten oder Verklemmen desselben verhindert ist. Die Führungslappen 13 und 14 erstrecken sich im wesentlichen nur über die Breite der Seitenschenkel 21 und 23 des Klemmkörpers 20 und ragen nicht in den Aufnahmeraum für die Stromsammelschiene 35, der durch die an den Enden der Seitenschenkel 21 und 23 rechtwinklig abstehenden Klemmbacken 22 und 24 begrenzt ist. Die Klemmbacken 22 und 24 tragen auf der der Stromsammelschiene 35 zugekehrten Seite die Verzahung 25, die die Kontaktgabe zwischen der Stromsammelschiene 35 und dem Klemmkörper 20 verbessert.

## Patentansprüche

1. Adapter zum mechanischen und elektrischen Verbinden von Installationsgeräten, Einspeise- und/oder Abgangsleitungen mit Stromsammelschienen (35) eines Sammelschienensystems (35), bei dem jeder Stromsammelschiene (35) eine an der Stromsammelschiene anliegende Kontaktschiene (10) und ein mittels einer Klemmschraube (28) in Richtung von der Stromsammelschiene weg verstellbarer Klemmkörper (20) zugeordnet ist, bei dem die Klemmkörper (20) mit Quersteg (26) und Seitenschenkeln (21,23) U-förmig ausgebildet sind und an den Enden der senkrecht zur Stromsammelschiene (35) gerichteten Seitenschenkel (21,23) rechtwinklig abstehenden Klemmbacken (22,25) tragen, bei dem die Klemmkörper (20) mit ihren Seitenschenkeln (21,23) die Kontaktschienen (10) umgreifen und in ihren den Stromsammelschienen (35) abgekehrten Querstegen (26) die Klemmschrauben (28) senkrecht zur Kontaktschiene verstellbar aufnehmen, bei dem die Klemmschrauben (28) sich auf den Kontaktschienen (10) abstützen, und bei dem die Klemmbacken (22,25) der Seitenschenkel (21,23) der Klemmkörper (20) die im Querschnitt rechteckigen Stromsammelschienen (35) den Kontaktschienen (10) abgekehrt hintergreifen, so daß die Klemmkörper (20) die Kontaktschienen (10) mit den zugeordneten Stromsammelschienen (35) mechanisch verspannen und elektrisch leitend verbinden, dadurch gekennzeichnet,
daß die Kontaktschienen (10) in dem zwischen den Seitenschenkeln (21,23) der Klemmkörper (20) liegenden Klemmabschnitt (11) an den den einander zugekehrten Innenseiten der Seitenschenkel (21,23) zugekehrten Kanten rechtwinklig abgewinkelte Führungslappen (13,14) tragen,
daß die Führungslappen (13,14) der Kontaktschienen (10) eine Breite aufweisen, die in etwa der Breite der Seitenschenkel (21,23) der Klemmkörper (20) entspricht, und
daß die Kontaktschienen (10) im Klemmabschnitt (11) mit den Führungslappen (13,14) eine Außenabmessung aufweisen, die etwa dem lichten Abstand der Seitenschenkel (21,23) der Klemmkörper (20) entspricht.

2. Adapter nach Anspruch 1,
dadurch gekennzeichnet,
daß die Führungslappen (13,14) der Kontaktschienen (10) in Richtung zu den Stromsammelschienen (35) hin abgewinkelt sind.

3. Adapter nach Anspruch 1 oder 2,
dadurch gekennzeichnet,
daß die Führungslappen (13,14) der Kontaktschienen (10) zumindest an der den Stromsammelschienen (35) zugekehrten Seite der Seitenschenkel (21,23) der Klemmkörper (20) nicht vorstehen.

4. Adapter nach einem der Ansprüche 1 bis 3,
dadurch gekennzeichnet,
daß die Ecken der Führungslappen (13,14) der Kontaktschienen (10) abgerundet sind.

## Claims

1. Adapter for the mechanical and electrical connection of installation equipment, input and/or output lines to bus bars (35) of a bus bar system (35), wherein each bus bar (35) has associated therewith a contact bar (10), which abuts against the bus bar, and a clamping member (20), which is adjustable in a direction away from the bus bar by means of a clamping screw (28), wherein the clamping members (20), provided with cross-piece member (26) and lateral arms (21, 23), have a U-shaped configuration and support clamping jaws (22, 25), which protrude at right angles from the ends of the lateral arms (21, 23) orientated vertically relative to the bus bar (35), wherein the clamping members (20) surround the contact bars (10) with their lateral arms (21, 23) and accommodate the clamping screws (28) in their cross-piece members (26) remote from the bus bars (35) so that said screws are vertically adjustable relative to the contact bar, wherein the clamping screws (28) are supported on the contact bars (10), and wherein the clamping jaws (22, 25) of the lateral arms (21, 23) of the clamping members (20) engage behind the bus bars (35), which have a rectangular cross-section, remote from the contact bars (10), so that the clamping members (20) mechanically clamp and electrically conductively connect the contact bars (10) to the associated bus bars (35), characterised in that the contact bars (10) in the clamping portion (11), which is situated between the lateral arms (21, 23) of the clamping members (20), support guide lugs (13, 14), which are bent-over at right angles, on the edges facing the internal surfaces which face one another of the lateral arms (21, 23), in that the guide lugs (13, 14) of the contact bars (10) have a width which corresponds substantially to the width of the lateral arms (21, 23) of the clamping members (20), and in that the contact bars (10) in the clamping portion (11), together with the guide lugs (13, 14), have an external dimension which corresponds substantially to the clearance between the lateral arms (21, 23) of the clamping members (20).

2. Adapter according to claim 1, characterised in that the guide lugs (13, 14) of the contact bars (10) are bent-over in a direction towards the bus bars (35).

3. Adapter according to claim 1 or 2, characterized in that the guide lugs (13, 14) of the contact bars (10) do not protrude at least beyond the side of the lateral arms (21, 23) of the clamping members (20) facing the bus bars (35).

4. Adapter according to one of claims 1 to 3, characterised in that the corners of the guide lugs (13, 14) of the contact bars (10) are rounded.

## Revendications

1. Adaptateur pour la connexion mécanique et électrique d'appareils d'équipement, de conducteurs d'alimentation et/ou de sortie avec des barres omnibus (35) d'un système de barres omnibus (35), dans lequel à chaque barre omnibus (35) est associée une barre de contact (10) appliquée contre la barre omnibus et un élément de serrage (20) pouvant au moyen d'une vis de serrage (28) être écarté de manière réglable de la barre omnibus, dans lequel les éléments de serrage (20) sont en forme de U avec une traverse (26) et avec des ailes latérales (21, 23) et portent, aux extrémités des ailes latérales (21, 23) orientées perpendiculairement à la barre omnibus (35), des mâchoires de serrage (22, 25) issues à angle droit, dans lequel les éléments de serrage (20) enserrent les barres de contact (10) au moyen de leurs ailes latérales (21, 23) et reçoivent, dans leurs traverses (26) non orientées vers les barres omnibus, les vis de serrage (28) de manière réglable perpendiculairement à la barre de contact, dans lequel les vis de serrage (28) s'appuient sur les barres de contact (10), et dans lequel les mâchoires de serrage (22, 25) des ailes latérales (21, 23) des éléments de serrage (20) viennent s'engager derrière les barres omnibus (35) à section transversale rectangulaire en opposition aux barres de contact (10), de telle sorte que les éléments de serrage (20) relient sous précontrainte mécanique et à conductivité électrique les barres de contact (10) aux barres omnibus associées,
caractérisé
par le fait que dans la portion de serrage (11) située entre les ailes latérales (21, 23) des éléments de serrage (20), les barres de contact (10) portent des languettes de guidage (13, 14) coudées à angle droit sur les arêtes orientées vers les faces intérieures en regard l'une de l'autre des ailes latérales (21, 23),
par le fait que les languettes de guidage (13, 14) des barres de contact (10) ont une largeur qui correspond sensiblement à la largeur des ailes latérales (21, 23) des éléments de serrage, et
par le fait qu'au sein de la portion de serrage (11) avec les languettes de guidage (13, 14), les barres de contact (10) ont une dimension extérieure qui correspond sensiblement à la distance intérieure des ailes latérales (21,23) des éléments de serrage (20).

2. Adaptateur suivant la revendication 1,
caractérisé par le fait
que les languettes de guidage (13, 14) des barres de contact (10) sont coudées en direction des barres omnibus (35).

3. Adaptateur suivant la revendication 1 ou la revendication 2,
caractérisé par le fait
que tout au moins sur le côté des ailes latérales (21, 23) orienté vers les barres omnibus (35) des éléments de serrage, les languettes de guidage (13, 14) des barres de contact (10) ne font pas protubérance.

4. Adaptateur suivant l'une quelconque des revendications de 1 à 3,
caractérisé par le fait
que les angles des languettes de guidage (13, 14) des barres de contact (10) sont arrondis.
